# EUROPEAN PATENT APPLICATION

(11) **EP 2 299 107 A1**
(43) Date of publication of application: **23.03.2011**
(21) Application number: 09733759.6
(22) Date of filing: 21.04.2009
(51) Int. Cl.: F03B 13/24

(54) **SYSTEM FOR GENERATING ENERGY FROM MARINE DYNAMICS**

(30) Priority: 22.04.2008 ES 200801298
(71) Applicant: Universidad De La Laguna, Santa Cruz de Tenerife (ES)
(72) Inventor: PADRÓN ARMAS, Isidro, E- 38280 Tegueste (Tenerife) (ES)
(74) Representative: ABG Patentes, S.L.
(86) International application number: PCT/ES2009/000217
(87) International publication number: WO 2009/130347

(57) **Abstract**

The invention relates to a system for generating energy from marine dynamics by means of compressing the air housed in contained inside conductor pipes and turbines, through a unit with a spherical geometry in the surface of which various holes are made, capturing the energy which is produced in the environment thereof, independently of marine dynamics. The holes of the sphere are connected to conductor pipes by a conical structure to allow capturing a larger volume of water and at the other end of the conductor pipe a nozzle connects with a turbine which allows increasing the pressure exerted by the water. The conductor pipe in turn has therein a pivot or plunger moving according to the pressure exerted by the marine dynamics.

## Description

### Field of the Art

Mechanical engineering. Renewable energies.

### Introduction

The exploitation of marine energy, both through the movement of currents and through the impact generated by waves, is a field which has given rise to various inventions relating to the way in which the movement is transformed into electric energy.

Generally, mechanisms are being developed which use the height difference of tides, interposing mobile parts to the natural upward or downward movement, together with mechanisms channeling and depositing the flow to obtain movement in an axis. By means of the coupling thereof to an alternator, the system can be used to generate electricity.

In this sense, various forms of energy generation are known, by means of tidal power stations (for example, La Rance in France), by means of marine turbines consisting of a horizontal flat blade which varies its inclination angle to obtain an upward and downward movement. Developments which attempt to generate energy from the temperature difference in the water by applying the Rankine cycle have also been set forth.

### State of the Art

Technologies have been generated for converting air flows, produced by the alternating movement of the sea, through turbines characterized by rotating in a single direction independently of the air flow, or pressurized structures in which the upper part moves with respect to the lower part due to the effect of the waves, producing electric energy through a linear generator, as well as articulated structures having hydraulic attachment nodes acting as electric generators, floats, etc., to pressurize the driven air.

For example, document CN1971032 describes a method in which the energy of the sea waves transfer, at high tide, pressure to a gas, due to the backflow driven by a container fixed on the beach, such that it is flooded by the same. The compression of the gas is connected to a turbine, such that it generated electricity, or document GB2403986 describes the exploitation of tidal energy of cells for use in the generation of electric energy by means of driving air in a toroidal structure.

Document JP2004150418 discloses a device for generating energy through the movement of a turbine by means of ocean/sea/lake water, with the peculiarity that it includes an air valve installed in the pump itself. From the drawing it is interpreted that it involves buoys in the form of balls which compress the air in their path through the pipes.

However, these devices are not known to be characterized by the development of a marine energy capturing unit like the one set forth in this invention, which allows capturing the energy of marine movement, independently of the dynamics.

### Description of the Invention

The intention is to generate energy from marine dynamics by means of compressing the air housed in conductor pipes and turbines through a system characterized by a marine movement capturing unit formed by a sphere submerged at a shallow depth and close to the coast. Said sphere is surrounded by a series of holes capturing the energy which is produced in the environment thereof, independently of marine dynamics. The holes of the sphere are connected to conductor pipes by a conical structure to allow capturing a larger volume of water and at the other end of the conductor pipe a nozzle connects with a turbine, which allows increasing the pressure exerted by the water. The conductor pipe in turn has therein a pivot or plunger moving according to the pressure exerted by the marine dynamics.

The nozzle has two valves, the first valve opens when the action of the water presses the air which is inside the pipe, driving the turbine. When the vacuum occurs inside the conductor pipe due to the retreat of the marine action, the first valve closes and a second valve opens, allowing the air which is inside the turbine to be aspirated, whereby the energy generating power would increase. This phenomenon would occur in each of the conductor pipes.

The capturing unit of this invention, unlike other patented units, is capable of generating more power since it is sensitive to any movement of the marine dynamics occurring in its environment, regardless of whether it is a marine current, the action of tides or the flows or backflows generated in the place in which it is located.

The suitable places for its location would be those with intense dynamics, close to the coast and at a shallow depth.

The capturing unit can be used independently or grouped with other units, keeping the suitable distances in relation to one another, to optimize the system.

### Description of the Drawings

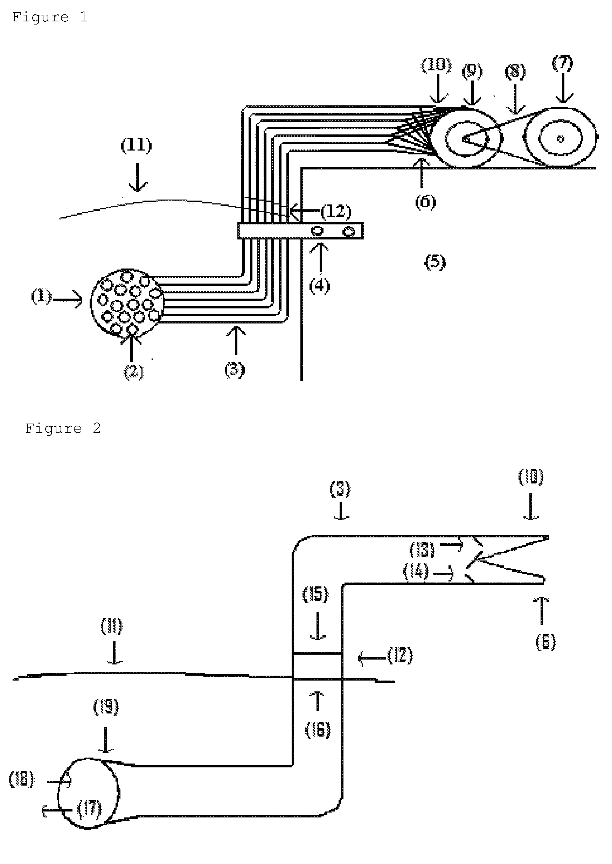

Figure 1 is a diagram of the invention which depicts the following elements: (1) Capturing unit, (2) Holes, (3) Conductor pipes, (4) Anchorage, (5) Concrete support, (6) Returns, (7) Generator, (8) Multiplying unit, (9) Turbine, (10) Nozzles, (11) Swell, (12) Pistons
Figure 2 is a depiction of the elements forming a conductor pipe. (3) Conductor pipe, (10) Delivery nozzle, (6) Return by suction, (13) Delivery valve, (14) Return valve, (12) Piston cylinder, (15) Downward movement of the piston cylinder, (16) Upward movement of the piston cylinder, (17) Water retreat indicator, (18) Delivery indicator, (19) Conical unit, (11) Water level.

### Embodiments of the Invention

Figure 1 shows the system anchored to a jetty by means of a concrete support (5), the conductor pipes (3), manufactured in stainless steel, are connected with the spherical capturing unit (1) also manufactured by means of stainless steel. The water product of the marine ebb is introduced in the capturing unit through holes (2) made therein, compressing the air housed therein by means of the movement of a piston (12). This air flow is channeled through a nozzle (10) towards a turbine (9), which by means of a multiplying unit (8) converts its movement into electric energy by means of an alternator (7).

At the end of the conductor pipe, Figure 2, two branches with a conical geometry are made, the delivery branch (10), which channels the compressed flow, and an ejection branch (6), with a cylindrical geometry and with a higher absorption capacity with respect to the first one which collects the return flow of the turbine, such that it aspirates the air therein, thus increasing the power generated.

The nozzle has two valves, the first is a delivery valve (13) and opens when the action of the water presses the air inside the pipe, driving the turbine. When the vacuum occurs inside the conductor pipe due to the retreat of the marine action, the first valve (13) closes and a second valve opens (14), allowing the air inside the turbine to be aspirated, whereby the energy generating power increases. This phenomenon occurs in each of the conductor pipes of the system.

## Claims

1. A system for generating energy from marine dynamics, **characterized by** a capturing unit with a spherical geometry in the surface of which various holes are made and by conductor pipes attached thereto which are in turn connected to a system for generating energy.

2. A system for generating energy from marine dynamics which contains coupled thereto a set of systems **characterized** according to claim 1.
